# EUROPÄISCHE PATENTANMELDUNG

(11) **EP 1 482 676 A2**
(43) Veröffentlichungstag der Anmeldung: **01.12.2004**
(21) Anmeldenummer: 04012002.4
(22) Anmeldetag: 21.05.2004
(51) Int. Cl.: H04L 12/40

(54) **CAN-Bus-System**

(30) Priorität: 28.05.2003 DE 10324437
(71) Anmelder: KNORR-BREMSE SYSTEME FÜR NUTZFAHRZEUGE GMBH, 80809 München (DE)
(72) Erfinder: Arlt, Andreas, 70499 Stuttgart (DE); Gscheidle, Wolfgang, 71720 Oberstenfeld (DE); Herges, Michael, 70825 Korntal-Münchingen (DE); Herrmann, Günter, 70569 Stuttgart (DE)
(74) Vertreter: Schönmann, Kurt, Dr.

(57) **Zusammenfassung**

Die Erfindung geht aus von einem CAN-Bus-System mit Datenverbindungen zwischen einem Zentralsteuergerät (ECU) und weiteren CAN-Teilnehmem über einen CAN-Stempunkt im Zentralsteuergerät (ECU).

Es wird vorgeschlagen, dass die weiteren CAN-Teilnehmer einzeln vollkommen oder bis auf eine gemeinsame Masseverbindung vollkommen galvanisch von dem CAN-Bus-System abkoppelbar sind.

## Beschreibung

Die Erfindung betrifft ein CAN-Bus-System mit Datenverbindungen zwischen einem Zentralsteuergerät und weiteren CAN-Teilnehmern über einen Stempunkt im Zentralsteuergerät.

In CAN-Bus-Systemen tritt das Problem auf, dass Ausfälle einzelner CAN-Teilnehmer, z. B. durch Leitungsstörungen, Logikfehler oder Softwarefehler das restliche CAN-Bus-System beeinträchtigen. Im Fehlerfall eines Zweigs eines CAN-Sternes soll aber das übrige CAN-Bus-System weiterhin funktionsfähig bleiben.

Bei CAN-Bus-Systemen nach dem Stand der Technik wird dazu die Spannungsversorgung eines CAN-Teilnehmers abgeschaltet. Durch diese Maßnahme haben Leitungsstörungen, Logikfehler oder Softwarefehler keine Auswirkungen auf das restliche CAN-Bus-System. Kurz- und Nebenschlüsse der einzelnen CAN-Leitungen untereinander oder zu den Spannungsversorgungsleitungen können jedoch den gesamten Datenverkehr und damit das gesamte CAN-Bus-System zum Erliegen bringen. Dies gilt auch bei Logikfehlern oder Softwarefehlem im Falle einer Fremdspannungsversorgung.

Der Erfindung liegt die Aufgabe zugrunde, ein CAN-Bus-System zu schaffen, bei dem bei Ausfall eines Zweiges des CAN-Stems das restliche CAN-Bus-System weiterhin ungestört funktionsfähig bleibt.

Diese Aufgabe wird gelöst durch ein CAN-Bus-System mit den Merkmalen des Anspruchs 1. Vorteilhafte Ausgestaltungen ergeben sich aus den Unteransprüchen.

Die vollkommene galvanische Abkoppelung der einzelnen CAN-Teilnehmer von dem CAN-Bus-System gewährleistet, dass keinerlei Störsignale wie Logikfehler oder Softwarefehler das Gesamtsystem stören oder lahm legen können. Der einzelne Zweig des CAN-Stem ist zwar tot, doch das restliche System ist ungestört funktionsfähig.

In einer vorteilhaften Ausgestaltung der Erfindung sind die einzelnen CAN-Teilnehmer derart aufgebaut, dass sie sich selbstständig vom CAN-Bus-System trennen können. Erkennt der CAN-Teilnehmer durch seine eigene Logik den Fehler selbst, kann er sich ohne weitere Kommunikation abschalten. Durch diese Maßnahme wird verhindert, dass ein Fehler in dem CAN-Teilnehmer selbst nicht das gesamte CAN-System lahm legt.

In einer alternativen vorteilhaften Ausgestaltung der Erfindung ist ein zentraler CAN-Teilnehmer derart aufgebaut, dass er die weiteren CAN-Teilnehmer vom CAN-Bus-System abtrennen kann. Dies ist insbesondere dann günstig, wenn dieser zentrale CAN-Teilnehmer im Vergleich zu den restlichen CAN-Teilnehmem über eine ausgefeiltere Fehleranalyse verfügt oder ein zentraler Stempunkt ist. Durch die auftrennbaren CAN-Leitungen kann ein Fehler auf einer dieser Leitungen zwischen dem Zentralsteuergerät und einem Druckregelmodul nicht mehr zum Ausfall des Gesamtsystems führen.

Vorteilhafter Weise erfolgt die Auftrennung des CAN-Busses zu den CAN-Teilnehmem innerhalb des Zentralsteuergeräts. Das Zentralsteuergerät ist ein geeigneter Ort der Fehleranalyse und steuert externe Module, z. B. Aktuatoren oder Sensoren über den CAN-Bus.

In einer vorteilhaften Ausgestaltung der Erfindung erfolgt die Auftrennung des CAN-Busses durch einen mechanischen Schalter. Dieser kann insbesondere als Relais ausgebildet sein. Damit ist in einfacher Weise eine vollständige galvanische Trennung gewährleistet.

In einer alternativen vorteilhaften Ausgestaltung der Erfindung erfolgt die Auftrennung des CAN-Busses durch ein optisch gesteuertes Relais (solid state relay). Dies hat zum einen eine schnelle, zum anderen aber auch sichere Abschaltung aufgrund der Potentialtrennung zwischen Steuer- und Lastkreis zum Vorteil.

In einer weiteren Variante der Erfindung erfolgt die Auftrennung des CAN-Busses durch einen Halbleiterschalter, insbesondere einen Bipolar- oder Feldeffekttransistor. Auf diese Weise lassen sich sehr schnelle Abschaltzeiten realisieren und hohe Ströme schalten.

Das erfindungsgemäße CAN-Bus-Systems ist besonders vorteilhaft einsetzbar in einem Bremssystem mit einem Zentralsteuergerät und einzelnen Druckregelmodulen, die vollkommen galvanisch abkoppelbar sind.

In einer Zeichnung ist ein Ausführungsbeispiel der Erfindung dargestellt.

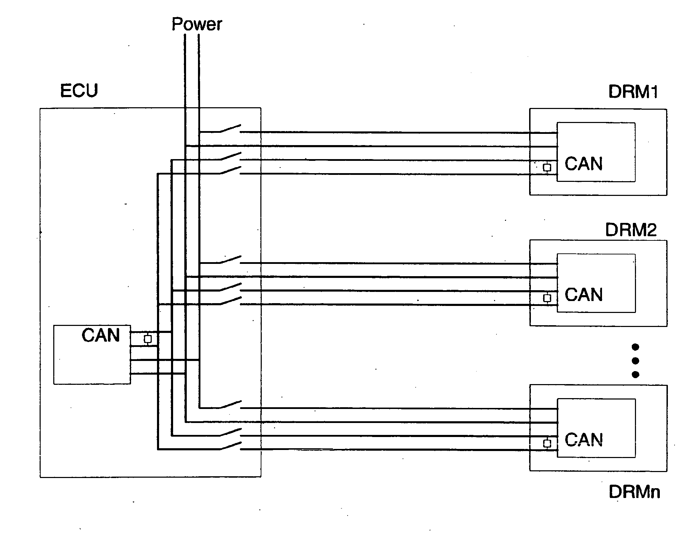

Die einzige Figur zeigt schematisch einen CAN-Stem mit im Zentralsteuergerät angeordneten Schaltern in den Daten- und Spannungsversorgungsleitungen .

Ein Zentralsteuergerät ECU mit einer Spannungsversorgung ist über eine CAN-Bus-Verbindung sternförmig mit Druckregelmodulen DRM1 ... DRMn verbunden. Die Druckregelmodule regeln den Bremsdruck z. B. für nicht dargestellte Fahrzeugbremsen. Innerhalb des Zentralsteuergeräts ECU sind an den Signalleitungen und an den spannungsbeaufschlagten Anschlussleitungen zu den Druckregelmodulen DRM1 ... DRMn Schalter zur galvanischen Entkopplung angebracht. Die Masseleitungen sind durchgehend, so dass das Zentralsteuergerät ECU und die Druckregelmodule DRM1 ... DRMn alle auf einem Nullpotential liegen. Treten Kurz- oder Nebenschlüsse in den einzelnen CAN-Leitungen untereinander oder zu den Spannungsversorgungsleitungen auf, können die Schalter zum betroffenen Druckregelmodul geöffnet werden, so dass die aus den Kurz- oder Nebenschlüsse resultierenden Fehlfunktionen nicht den gesamten Datenverkehr und damit das gesamte CAN-Bus-System zum Erliegen bringen können.

### Bezugszeichen

- ECU: Zentralsteuergerät
- DRM1: Druckregelmodul
- DRM2: Druckregelmodul
- DRMn: Druckregelmodul

## Patentansprüche

1. CAN-Bus-System mit Datenverbindungen zwischen einem Zentralsteuergerät (ECU) und weiteren CAN-Teilnehmem über einen CAN-Stempunkt im Zentralsteuergerät (ECU), **dadurch gekennzeichnet, dass** die weiteren CAN-Teilnehmer einzeln vollkommen galvanisch von dem CAN-Bus-System abkoppelbar sind.

2. CAN-Bus-System mit Datenverbindungen zwischen einem Zentralsteuergerät (ECU) und weiteren CAN-Teilnehmern über einen CAN-Stempunkt im Zentralsteuergerät (ECU), **dadurch gekennzeichnet, dass** die weiteren CAN-Teilnehmer einzeln bis auf eine gemeinsame Masseverbindung vollkommen galvanisch von dem CAN-Bus-System abkoppelbar sind.

3. CAN-Bus-System nach Anspruch 1 oder 2, **dadurch gekennzeichnet, dass** die einzelnen CAN-Teilnehmer derart aufgebaut sind, dass sie sich selbstständig vom CAN-Bus-System trennen können.

4. CAN-Bus-System nach Anspruch 1 oder 2, **dadurch gekennzeichnet, dass** ein zentraler CAN-Teilnehmer derart aufgebaut ist, dass er die weiteren CAN-Teilnehmer vom CAN-Bus-System abtrennen kann.

5. CAN-Bus-System nach einem der vorstehenden Ansprüche, **dadurch gekennzeichnet, dass** die Auftrennung des CAN-Busses zu den CAN-Teilnehmem innerhalb des Zentralsteuergeräts (ECU) erfolgt.

6. CAN-Bus-System nach einem der vorstehenden Ansprüche, **dadurch gekennzeichnet, dass** die Auftrennung des CAN-Busses durch einen mechanischen Schalter, insbesondere ein Relais erfolgt.

7. CAN-Bus-System nach einem der Ansprüche 1 bis 5, **dadurch gekennzeichnet, dass** die Auftrennung des CAN-Busses durch ein optisch gesteuertes Relais erfolgt.

8. CAN-Bus-System nach einem der Ansprüche 1 bis 5, **dadurch gekennzeichnet, dass** die Auftrennung des CAN-Busses durch einen Halbleiterschalter, insbesondere einen Bipolar- oder Feldeffekttransistor erfolgt.

9. Verwendung eines CAN-Bus-Systems nach einem der vorstehenden Ansprüche in einem Bremssystem mit einem Zentralsteuergerät (ECU) und einzelnen Druckregelmodulen (DRM1 ... DRMn), **dadurch gekennzeichnet, dass** die einzelnen Druckregelmodule (DRM1 ... DRMn) vollkommen oder bis auf eine gemeinsame Masseverbindung vollkommen galvanisch abkoppelbar sind.
